# EUROPEAN PATENT APPLICATION

(11) **EP 2 837 999 A1**
(43) Date of publication of application: **18.02.2015**
(21) Application number: 13820277.5
(22) Date of filing: 15.07.2013
(51) Int. Cl.: G06F 3/048

(54) **USER INTERFACE ICON MANGEMENT METHOD AND TOUCH CONTROL DEVICE**

(30) Priority: 18.07.2012 CN 201210259359
(71) Applicant: Huawei Device Co., Ltd., Longgang District Shenzhen Guangdong 518129 (CN)
(72) Inventor: TAN, Binbin, Shenzhen Guangdong 518129 (CN)
(74) Representative: Körber, Martin Hans
(86) International application number: PCT/CN2013/079377
(87) International publication number: WO 2014/012472

(57) **Abstract**

Embodiments of the present invention provide a method for managing an icon on a user interface, and a touch-control device, and relates to the field of communications, so as to improve user experience. The method includes: receiving an icon-based state activation instruction through a screen of a touch-control device, so as to activate the icon to be in a movable state; receiving, by the touch-control device, a page switching instruction, and switching a currently displayed user interface page according to the page switching instruction, where the page switching instruction is a slide operation of a user that receives the screen of the touch-control device; and releasing the icon, so that the touch-control device moves the icon to a switched-to user interface page The embodiments of the present invention are used for managing an icon on a user interface.

## Description

This application claims priority to Chinese Patent Application No. CN 201210259359.1, filed with the Chinese Patent Office on July 18, 2012 and entitled "METHOD FOR MANAGING ICON ON USER INTERFACE, AND TOUCH-CONTROL DEVICE", which are incorporated herein by reference in their entireties.

### TECHNICAL FIELD

The present invention relates to the field of communications, and in particular, to a method for managing an icon on a user interface, and a touch-control device.

### BACKGROUND

A desktop container is included in an intelligent terminal OS (Operating System, operating system), where the desktop container is used for placing components. The desktop container may include multiple pages. When a desktop container is accessed, a homepage is firstly displayed, where a first page of the desktop container is also called the first page of the desktop container, or a homepage of the desktop container, other pages are arranged in a sequence as the second page, the third page, and so on, and icons corresponding to the components are displayed on the pages included in the desktop container. On a full-touch terminal, a physical navigation key is cancelled, and touch operation-based screen gestures are used to replace some operation keys. A user slides right on a touchscreen to switch a page to a previous page, or slides left to switch a page to a next page.

Currently, when a user needs to move a certain component on a current page to another page, the user touches and holds an icon corresponding to the component on the current page, and after an operation of moving the component is triggered, drags the component to a left edge or a right edge of the current page, so that the page of the desktop container is correspondingly switched to a previous page or switched to a next page, and after the page is switched to a target page, the touched-and-held icon corresponding to the component is released.

However, for a user who gets used to operating a large-screen terminal with a single hand, when an icon corresponding to a component is touched and held and dragged during the foregoing operation of moving the component based on a touch operation, great pressure is imposed on a thumb and easily brings tiredness to the hand of the user; in addition, the thumb needs to slide on a large screen, making it difficult to hold the terminal tightly, and increasing a risk that the terminal falls down. The foregoing two problems reduce operating experience of a user.

### SUMMARY

Embodiments of the present invention provide a method for managing an icon on a user interface and a touch-control device, so as to improve user experience.

To achieve the foregoing objectives, the following technical solutions are adopted in the embodiments of the present invention.

According to one aspect, a method for managing an icon on a user interface is provided and includes:
receiving an icon-based state activation instruction through a screen of a touch-control device, so as to activate the icon to be in a movable state; receiving, by the touch-control device, a page switching instruction, and switching a currently displayed user interface page according to the page switching instruction, where the page switching instruction is a slide operation of a user that receives the screen of the touch-control device; and releasing the icon, so that the touch-control device moves the icon to a switched-to user interface page.

Further, after the receiving an icon-based state activation instruction through a screen of a touch-control device, and before the receiving, by the touch-control device, a page switching instruction, the method further includes: keeping the icon locked in the movable state.

Further, the keeping the icon locked in the movable state includes: keeping the icon locked in the movable state by using a touch operation, and the touch operation includes a tap operation, a double-tap operation, or a touch-and-hold operation.

In the foregoing possible implementation manner, the releasing the icon includes: receiving an icon-based state release instruction through the screen of the touch-control device, or releasing the state activation instruction.

According to another aspect, a touch-control device is provided and includes a touchscreen and a processor, where:
the touchscreen is configured to: when receiving an icon-based state activation instruction, send the state activation instruction to the processor; after receiving a page switching instruction, send the page switching instruction to the processor; and when the touchscreen detects that the icon is released, send the release instruction to the processor; and the processor is configured to: activate the icon to be in a movable state after receiving the state activation instruction sent by the touchscreen; switch a currently displayed user interface page according to the page switching instruction sent by the touchscreen; receive the release instruction sent by the touchscreen when the touchscreen detects that the icon is released; and move the icon to a switched-to user interface page according to the release instruction.

In the foregoing possible implementation manner, the touchscreen is further configured to keep the icon locked in the movable state after receiving the icon-based state activation instruction and before receiving the page switching instruction.

Further, the touchscreen is specifically configured to keep the icon locked in the movable state by using a touch operation, and the touch operation includes a tap operation, a double-tap operation, or a touch-and-hold operation.

Further, that the touchscreen sends the release instruction to the processor when detecting that the icon is released includes: the touchscreen receives an icon-based state release instruction, and sends the release instruction to the processor; or the touchscreen releases the state activation instruction, and sends the release instruction to the processor.

The embodiments of the present invention provide a method for managing an icon on a user interface, and a touch-control device. The touch-control device receives an icon-based state activation instruction through a screen, so as to activate the icon to be in a movable state, receives a page switching instruction, switches a currently displayed user interface page according to the page switching instruction, and releases the icon after switching is complete, so that the touch-control device moves the icon to a switched-to user interface page. Therefore, when a to-be-moved icon is in a movable state, a user needs to move the icon from a current page to a switched-to page only by controlling a screen to perform page switching, which is simple in operation and improves user experience.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a method for managing an icon on a user interface according to an embodiment of the present invention;
FIG. 2 is an exemplary diagram of a method for managing an icon on a user interface according to an embodiment of the present invention;
FIG. 3 is a schematic diagram of another method for managing an icon on a user interface according to an embodiment of the present invention; and
FIG. 4 is a schematic structural diagram of a touch-control device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

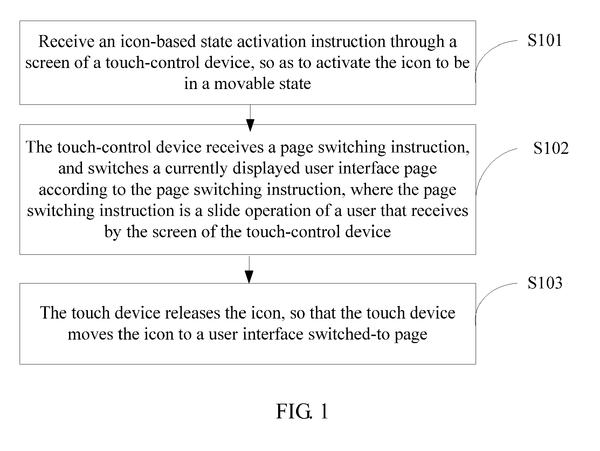

An embodiment of the present invention provides a method for managing an icon on a user interface. As shown in FIG. 1, an executive body of the method is a touch-control device, and the method includes:
S101. Receive an icon-based state activation instruction through a screen of a touch-control device, so as to activate the icon to be in a movable state.

The icon is displayed on a current page of the screen of the touch-control device, a user may move the icon to another page according to a preference of the user, and the icon may correspond to an application program component installed by the user, or may correspond to a component carried by the touch-control device, to which this embodiment of the present invention is not limited.

For example, the user touches and holds a to-be-moved icon through the screen of the touch-control device, so as to make the icon enter the movable state; or if the user takes away a finger that performs an operation after touching and holding the icon to a preset time through the touchscreen of the touch-control device, the icon is in the movable state, where the preset time may be set in advance in the touch-control device by a developer.

It should be noted that the foregoing movable state indicates that the user may move the icon by performing such an action as dragging and pulling on the icon on the touchscreen of the touch-control device. Preferably, the icon in the movable state is different from other icons on a currently displayed page of the screen of the touch-control device. For example, the icon in the movable state may be in a floating state (the user intuitively observes, through the screen of the touch-control device, that the icon floats over the other icons), or the icon in the movable state may further show a color different from those of the other icons on the screen of the touch-control device, to which this embodiment of the present invention is not limited.

S102. The touch-control device receives a page switching instruction, and switches a currently displayed user interface page according to the page switching instruction. The page switching instruction is a slide operation of a user that receives the screen of the touch-control device.

The page switching instruction is a slide operation of the user on the screen. Optionally, according to the prior art, when the user slides from left to right, the page switching instruction is switching to a previous screen of the user interface; and when the user slides from right to left, the page switching instruction is switching to a next screen of the user interface.

Specifically, after the touch-control device receives the page switching instruction, a screen page of the touch-control device is switched from a current page to a page indicated by the page switching instruction.

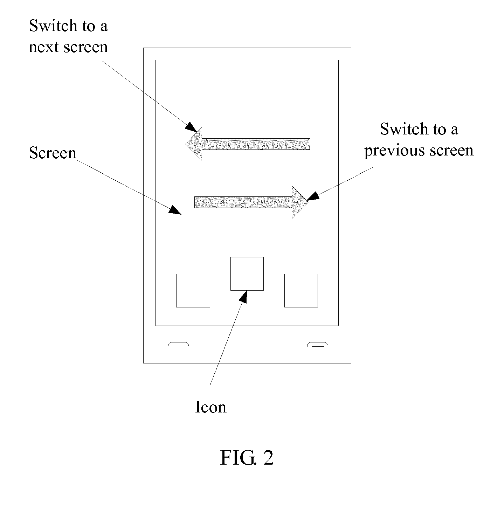

For example, as shown in FIG. 2, a touch-control mobile phone is used as an example for description. If a user slides a screen from left to right, and a touch-control device receives a page switching instruction for switching to a previous screen of the user interface, a screen page of the touch-control device is switched from a current page to a page to the left of the current page; and similarly, if the user slides the screen from right to left, and the touch-control device receives a page switching instruction for switching to a next screen of the user interface, the screen page of the touch-control device is switched from the current page to a page to the right of the current page.

In addition, after the icon-based state activation instruction is received through the screen of the touch-control device, and before the touch-control device receives the page switching instruction through an edge area of the screen, the method includes that:
the touch-control device keeps the icon locked in the movable state.

Specifically, keeping the icon locked in the movable state may be implemented by using a touch operation of the user, where the touch operation of the user includes a tap operation, a double-tap operation, or a touch-and-hold operation, to which this embodiment of the present invention is not limited. A specific operating manner of the touch operation may be preset in the touch-control device, or may be configured by the user, to which this embodiment of the present invention is not limited.

S103. The touch-control device releases the icon, so that the touch-control device moves the icon to a switched-to user interface page.

That the icon is released may specifically include the following two scenarios:
Scenario 1: If the user touches and holds the to-be-moved icon through the touchscreen of the touch-control device to make the icon enter the movable state, the foregoing state activation instruction is released after a currently displayed user interface page is switched, so that the icon is moved to a position, which is the closest to the icon, on the switched-to page.
Scenario 2: If the user takes away the finger that performs the operation after touching and holding the icon to a preset time through the touchscreen of the touch-control device, an icon-based state release instruction is received through the screen of the touch-control device when the icon is in the movable state, so that the icon is moved to a position, which is the closest to the icon, on the switched-to page.

The foregoing receiving a state release instruction may be specifically in a manner of touching and holding, by the user, the icon to a preset time through the touchscreen of the touch-control device, to which this embodiment of the present invention is not limited.

It should be noted that the touch-control device in the foregoing embodiment may be various devices on which a touch operation is performed through a touchscreen, such as a touchscreen mobile phone or a touchscreen tablet computer, to which this embodiment of the present invention is not limited.

By using the method in the foregoing embodiment, a user needs to trigger page switching for a user interface only by sliding a screen with a finger when a to-be-moved icon is in a movable state, so as to move the icon from a current page to a switched-to page, which is simple in operation and improves user experience.

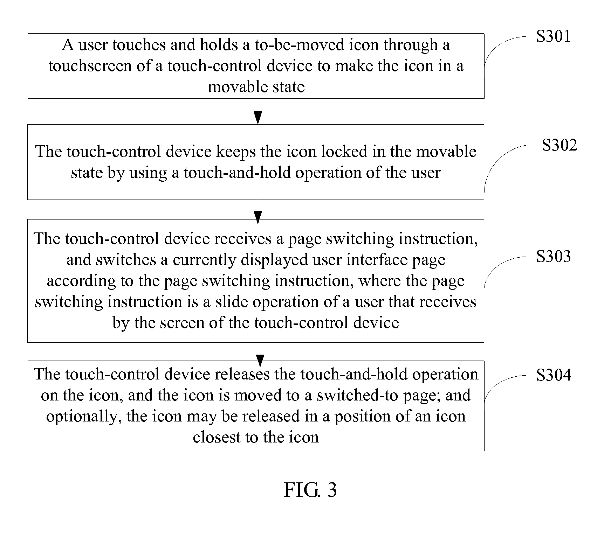

Preferably, an embodiment of the present invention provides a method for managing an icon on a user interface. As shown in FIG. 3, specific steps of the method includes:
S301. A user touches and holds a to-be-moved icon through a touchscreen of a touch-control device to make the icon enter a movable state.

The icon is displayed on a current page of the screen of the touch-control device, the user may move the icon to another page according to a preference of the user, the icon may correspond to an application program component installed by the user, or may correspond to a component carried by the touch-control device, to which this embodiment of the present invention is not limited.

The foregoing movable state indicates that the user may move the icon by performing such an action as dragging and pulling on the icon on the touchscreen of the touch-control device. Preferably, the icon in the movable state is different from other icons on a currently displayed page of the screen of the touch-control device. For example, the icon in the movable state may be in a floating state (the user intuitively observes, through the screen of the touch-control device, that the icon floats over the other icons), or the icon in the movable state may further show a color different from those of the other icons on the screen of the touch-control device, to which this embodiment of the present invention is not limited.

S302. The touch-control device keeps the icon locked in the movable state by using a touch-and-hold operation of the user.

S303. The touch-control device receives a page switching instruction, and switches a currently displayed user interface page according to the page switching instruction. The page switching instruction is a slide operation of a user that receives the screen of the touch-control device.

The page switching instruction is a slide operation of the user on the screen. Optionally, according to the prior art, when the user slides from left to right, the page switching instruction is: switching to a previous screen of the user interface; and when the user slides from right to left, the page switching instruction is: switching to a next screen of the user interface. For details, refer to the description of FIG. 2 in the foregoing embodiment.

S304. The touch-control device releases the touch-and-hold operation on the icon, and the icon is moved to a switched-to page; and optionally, the icon may be released in a position of an icon closest to the icon.

It should be noted that the touch-control device in the foregoing embodiment may be any device on which a touch operation is performed through a touchscreen, such as a touchscreen mobile phone or a touchscreen tablet computer, to which this embodiment of the present invention is not limited.

By using the method in the foregoing embodiment, a user needs to trigger page switching of a user interface only by sliding a screen with a finger when a to-be-moved icon is in a movable state, so as to move the icon from a current page to a switched-to page, which is simple in operation and improves user experience.

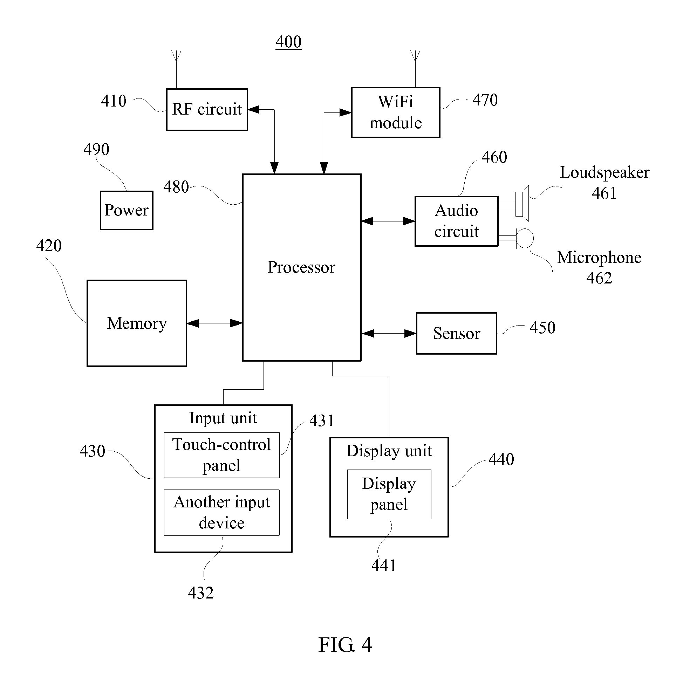

FIG. 4 shows a structure of a terminal according to an embodiment of the present invention. The terminal according to this embodiment of the present invention may be configured to implement the methods of the first embodiment and the second embodiment of the present invention. For ease of description, only parts related to this embodiment of the present invention are shown. For specific technical details that are not disclosed, refer to the first embodiment and the second embodiment.

The terminal may be a terminal device, such as a mobile phone, a tablet computer, a PDA (Personal Digital Assistant, personal digital assistant), a POS (Point of Sales, point of sales), or a vehicle-mounted computer. That the terminal is a mobile phone is used as an example. FIG. 4 shows a block diagram of a part of a structure of the mobile phone 400 related to the terminal according to this embodiment of the present invention. Referring to FIG. 4, the mobile phone 400 includes such parts as an RF (Radio Frequency, radio frequency) circuit 410, a memory 420, an input unit 430, a display unit 440, a sensor 450, an audio circuit 460, a WiFi (wireless fidelity, wireless fidelity) module 470, a processor 480, and a power supply 490. A person skilled in the art can understand that, the structure of the mobile phone shown in FIG. 4 does not constitute a limitation on the mobile phone, and the mobile phone may include more or fewer parts than those shown in the figure, or combine some parts, or have different arrangement of the parts.

With reference to FIG. 4, the following specifically describes compositional parts of the mobile phone 400.

The RF circuit 410 may be configured to receive and send a signal during receiving and sending information, or a call, and particularly, after receiving downlink information of a base station, send the downlink information to the processor 480 for processing. In addition, the RF circuit 410 sends uplink data to the base station. Generally, the RF circuit includes, but is not limited to an antenna, at least one amplifier, an information receiving and sending machine, a coupler, an LNA (Low Noise Amplifier, low noise amplifier), a duplexer, and the like. In addition, the RF circuit 410 may also communicate with a network and other devices via wireless communications. The wireless communications may use any communications standard or protocol, includes, but is not limited to GSM (Global System of Mobile communication, global system for mobile communication), GPRS (General Packet Radio Service, global packet radio service), CDMA (Code Division Multiple Access, code division multiple access), WCDMA (Wideband Code Division Multiple Access, a wideband code division multiple access), LTE (Long Term Evolution, long term evolution), email, SMS (Short Messaging Service, short messaging service), and the like.

The memory 420 may be configured to store a software program and module. The processor 480 runs the software program and module stored in the memory 420, so to execute all types of function applications of the mobile phone and process data. The memory 420 may mainly include a program storage area and a data storage area, where the program storage area may store an operating system, an application program (for example, a sound playback function and an image playback function) required by at least one function, and the like; and the data storage area may store data that is created according to usage of the mobile phone 400 (for example, audio data and a phone book), and the like. In addition, the memory 420 may include a high-speed random access memory, and may also include a non-volatile memory, for example, at least one disk storage device, a flash memory device, or another non-volatile solid storage device.

The input unit 430 may be configured to receive number or character information that is input, and generate key signal input related to user settings and function control of the mobile phone 400. Specifically, the input unit 430 may include a touch-control panel 431 and another input device 432. The touch-control panel 431, also called a touchscreen, may collect operations of a user on the touch-control panel or near the touch-control panel (for example, operations performed by the user on the touch-control panel 431 or near the touch-control panel 431 by using any suitable object or accessory such as a finger and a touchpen), and drive a corresponding connecting apparatus according to a preset program. Optionally, the touch-control panel 431 may include two parts, namely, a touch detecting apparatus and a touch controller, where the touch detecting apparatus detects a touch direction of the user, detects a signal brought by the touch operation, and transfers the signal to the touch controller, and the touch controller receives touch information from the touch detecting apparatus, converts the touch information into coordinates of a touch point, sends the coordinates to the processor 480, and can receive and execute a command sent by the processor 480. In addition, the touch-control panel 431 may be implemented in one of a plurality of forms, such as a resistor, a capacitor, an infrared ray, or a surface acoustic wave. In addition to the touch-control panel 431, the input unit 430 may also include the another input device 432. Specifically, the another input device 432 may include, but is not limited to one or more types of the following: a physical keyboard, a function key (such as a volume control key or an on/off key), a trackball, a mouse, and an operating lever.

The display unit 440 may be configured to display information input by the user, or information provided for the user, and various menus of the mobile phone 400. The display unit 440 may include a display panel 441. Optionally, the display panel 441 may be configured in such a form as an LCD (Liquid Crystal Display, liquid crystal display) or an OLED (Organic Light-Emitting Diode, organic light-emitting diode). Further, the touch-control panel 431 may cover the display panel 441; after detecting a touch operation on or near the touch-control panel 431, the touch-control panel 431 transfers the touch operation to the processor 480, so as to determine a type of a touch event; and then, the processor 480 provides a corresponding vision output on the display panel 441 according to the type of the touch event. In FIG. 4, the touch-control panel 431 and the display panel 441 are two independent parts for implementing input and input functions of the mobile phone 400. However, the touch-control panel 431 and the display panel 441 may be integrated in some embodiments to implement the input and output functions of the mobile phone 400.

The mobile phone 400 may also include at least one type of sensor 450, such as a light sensor, a motion sensor, and other sensors. Specifically, the light sensor may include an ambient light sensor and a proximity sensor, where the ambient light sensor can adjust luminance of the display panel 441 according to intensity of ambient light, and the proximity sensor may turn off the display panel 441 and/or backlight when the mobile phone 400 is moved near an ear. As one type of the motion sensor, an accelerometer sensor may detect a magnitude of accelerations in all directions (three axes generally), may detect a magnitude and a direction of gravity when the accelerometer is at rest, may be configured to recognize mobile phone posture applications (such as landscape and portrait switch, relevant games and magnetometer posture calibration), and vibration recognition related functions (such as a pedometer and knocking), and the like; and for other sensors, such as a gyroscope, a barometer, a hygrometer, a thermometer, and an infrared sensor, that may be further configured for the mobile phone 400, details are not repeatedly described herein.

The audio circuit 460, a loudspeaker 461 and a microphone 462 may provide audio interfaces between the user and the mobile phone 400. The audio circuit 460 can convert received audio data into an electrical signal and transmit the electrical signal to the loudspeaker 461, and the loudspeaker 461 converts the electrical signal into a sound signal for outputting; and on the other hand, the microphone 462 converts a collected sound signal into an electrical signal, the audio circuit 460 receives the electrical signal and converts the electrical signal into audio data, and outputs the audio data to the processor 480 for processing, and sends processed audio data to, for example, another mobile phone through the RF circuit 410, or outputs the audio data to the memory 420 for further processing.

WiFi belongs to a short-range wireless transmission technology. The mobile phone 400 may help the user receive and send an email, browse a webpage, visit streaming media, and the like by using the WiFi module 470, and the mobile phone 400 provides wireless broadband Internet visit for the user. Although the WiFi module 470 is shown in FIG. 4, it can be understood that the WiFi module 470 is not essential to the mobile phone 400, and absolutely may be omitted as required within a scope without changing an essence of the present invention

The processor 480 is a control center of the mobile phone 400, connects each part of the whole mobile phone by using all types of interfaces and circuits, and executes functions of the mobile phone 400 and processes data by running or executing the software program and/or module stored in the memory 420 and calling data stored in the memory 420, so as to monitor the mobile phone as a whole. Optionally, the processor 480 may include one or more processing units. Preferably, the processor 480 may be integrated with an application processor and a modem processor, where the application processor mainly processes an operating system, a user interface, an application program, and the like, and the modem processor mainly processes the wireless communications. It can be understood that the foregoing modem processor may not be integrated into the processor 480.

The mobile phone 400 further includes the power supply 490 (such as a battery) that supplies power to each part. Preferably, the power supply may be logically connected to the processor 480 by using a power supply management system, so that functions of charging, discharging, and power consumption management are implemented by using the power supply management system.

Although not shown, a camera, a Bluetooth module, and the like may be included in the mobile phone 400, and details are not repeatedly described herein.

In this embodiment of the present invention, the touch-control panel 431 and the processor 480 that are included by the terminal further have the following functions:

The touch-control panel 431 is configured to: when receiving an icon-based state activation instruction, send the state activation instruction to the processor 480; after receiving a page switching instruction, send the page switching instruction to the processor 480; and when the touchscreen detects that the icon is released, send a release instruction to the processor 480.

The icon is displayed on a current page of the screen of the touch-control device, the user may move the icon to another page according to a preference of the user, and the icon may correspond to an application program component installed by the user, or may correspond to a component carried by the touch-control device, to which this embodiment of the present invention is not limited.

The processor 480 is configured to activate the icon to be in a movable state after receiving the state activation instruction sent by the touch-control panel 431; switch a currently displayed user interface page according to the page switching instruction sent by the touch-control panel 480; receive the release instruction sent by the touch-control panel 431 when the touch-control panel 431 detects that the icon is released; and move, according to the release instruction, the icon to a switched-to user interface page

Further, the touch-control panel 431 is further configured to: after receiving the icon-based state activation instruction and before receiving the page switching instruction, keep the icon locked in the movable state.

The foregoing movable state indicates that the user may move the icon by performing such an action as dragging and pulling on the icon on the screen of the touch-control device. Preferably, the icon in the movable state is different from other icons on a currently displayed page of the screen of the touch-control device. For example, the icon in the movable state may be in a floating state (the user intuitively observes, through the screen of the touch-control device, that the icon floats over the other icons), or the icon in the movable state may further show a color different from those of the other icons on the screen of the touch-control device, to which this embodiment of the present invention is not limited.

Further, the touch-control panel 431 is specifically configured to keep the icon locked in the movable state by using a touch operation, where
the touch operation includes a tap operation, a double-tap operation, or a touch-and-hold operation, to which this embodiment of the present invention is not limited. A specific operating manner of the touch operation may be preset in the touch-control device, or may be configured by the user, to which this embodiment of the present invention is not limited.

Optionally, the touch-control panel 431 is specifically configured to receive an icon-based state release instruction, and sends the release instruction to the processor 480.

Optionally, the touch-control panel 431 is specifically configured to release the state activation instruction, and sends a release instruction to the processor 480.

It should be noted that the touch-control device in the foregoing embodiment may be various devices on which a touch operation is performed through a touchscreen, such as a touchscreen mobile phone or a touchscreen tablet computer, to which this embodiment of the present invention is not limited. Specifically, as shown in FIG. 5, a touch-control device entity 500 is described. The touch-control device entity 500 shows an actual hardware structure of a touch-control device, such as a touchscreen mobile phone or a touchscreen tablet computer, and connection between modules of the touch-control device entity 500 is also shown in FIG. 5. The touch-control panel 431 and the processor 480 in a touch-control device entity 500 correspond to a touchscreen 401 and a processor 402 of the foregoing touch-control device 400, and the touch-control device entity 500 is applied to the foregoing icon management method for a user interface.

By using the foregoing touch-control device, or the control-control device entity, a user needs to trigger page switching for a user interface only by sliding a screen with a finger when a to-be-moved icon is in a movable state, so as to move the icon from a current page to a switched-to page, which is simple in operation and improves user experience.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disc, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for managing an icon on a user interface, comprising:
receiving an icon-based state activation instruction through a screen of a touch-control device, so as to activate the icon to be in a movable state;
receiving, by the touch-control device, a page switching instruction, and switching a currently displayed user interface page according to the page switching instruction, wherein the page switching instruction is a slide operation of a user that receives the screen of the touch-control device; and
releasing the icon, so that the touch-control device moves the icon to a switched-to user interface page

2. The method according to claim 1, wherein after the receiving an icon-based state activation instruction through a screen of a touch-control device, and before the receiving, by the touch-control device, a page switching instruction, the method comprises:
keeping the icon locked in the movable state.

3. The method according to claim 2, wherein the keeping the icon locked in the movable state comprises: keeping the icon locked in the movable state by using a touch operation, and the touch operation comprises a tap operation, a double-tap operation, or a touch-and-hold operation.

4. The method according to any one of claims 1 to 3, wherein the releasing the icon comprises:
receiving an icon-based state release instruction through the screen of the touch-control device;
alternatively,
releasing the state activation instruction.

5. A touch-control device, comprising a touchscreen and a processor, wherein:
the touchscreen is configured to: when receiving an icon-based state activation instruction, send the state activation instruction to the processor; after receiving a page switching instruction, send the page switching instruction to the processor, and when the touchscreen detects that the icon is released, send the release instruction to the processor; and
the processor is configured to: activate the icon to be in a movable state after receiving the state activation instruction sent by the touchscreen; switch a currently displayed user interface page according to the page switching instruction sent by the touchscreen; receive the release instruction sent by the touchscreen when the touchscreen detects that the icon is released; and move the icon to a switched-to user interface page according to the release instruction.

6. The device according to claim 5, wherein the touchscreen is further configured to keep the icon locked in the movable state after receiving the icon-based state activation instruction and before receiving the page switching instruction.

7. The device according to claim 6, wherein the touchscreen is specifically configured to keep the icon locked in the movable state by using a touch operation, and the touch operation comprises a tap operation, a double-tap operation, or a touch-and-hold operation.

8. The device according to claims 5 to 7, wherein that the touchscreen sends the release instruction to the processor when detecting that the icon is released comprises:
the touchscreen receives an icon-based state release instruction, and sends the release instruction to the processor;
alternatively,
the touchscreen releases the state activation instruction, and sends the release instruction to the processor.
